(19) Europäisches Patentamt
European Patent Office
Office européen des brevets

(11) **EP 2 267 081 B1**

## (12) EUROPEAN PATENT SPECIFICATION

(45) Date of publication and mention
of the grant of the patent:
**22.01.2014 Bulletin 2014/04**

(21) Application number: **09717133.4**

(22) Date of filing: **27.02.2009**

(51) Int Cl.:
*C08L 101/00* (2006.01)    *B29B 11/16* (2006.01)
*C08J 5/04* (2006.01)    *C08K 3/34* (2006.01)
*C08K 7/02* (2006.01)    *C08K 7/22* (2006.01)
*C08L 61/06* (2006.01)

(86) International application number:
**PCT/JP2009/053737**

(87) International publication number:
**WO 2009/110389 (11.09.2009 Gazette 2009/37)**

(54) **HEAT-CURABLE RESIN COMPOSITION, FIBER-REINFORCED MOLDING MATERIAL AND MOLDED ARTICLE**

WÄRMEHÄRTBARE HARZZUSAMMENSETZUNG, FASERVERSTÄRKTE FORMMASSE UND FORMKÖRPER

COMPOSITION DE RÉSINE DURCISSABLE À LA CHALEUR, MATÉRIAU DE MOULAGE RENFORCÉ PAR DES FIBRES ET ARTICLE MOULÉ

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.03.2008 JP 2008058434**

(43) Date of publication of application:
**29.12.2010 Bulletin 2010/52**

(73) Proprietor: **Asahi Organic Chemicals Industry Co., Ltd.**
**Nobeoka-city**
**Miyazaki 882-8688 (JP)**

(72) Inventor: **SHINOHARA, Hirofumi**
**Niwa-gun**
**Aichi 480-0105 (JP)**

(74) Representative: **Paget, Hugh Charles Edward et al**
**Mewburn Ellis LLP**
**33 Gutter Lane**
**London**
**EC2V 8AS (GB)**

(56) References cited:
WO-A2-2006/121768    WO-A2-2006/122034
JP-A- 1 020 233    JP-A- 3 024 943
JP-A- 5 239 255    JP-A- 2008 248 083

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a thermosetting resin composition that is advantageously used as a binder for a fibrous base material, a fiber-reinforced molding material obtained by using the thermosetting resin composition, and a molded article obtained by molding and curing the fiber-reinforced molding material.

BACKGROUND ART

Conventionally, a molded article comprising a fiber-reinforced molding material, which is referred to as FRP, is practically used as a housing-related product such as a bathtub, a water tank, a wastewater treatment tank, and an exterior or interior panel, a vehicle-related product, an advertising board, a leisure boat, and a bobbin, for example, because, as is well known, it has an excellent mechanical strength and endurance.

As the fiber-reinforced molding material, there is used a composite material that is obtained by the steps of: adding an inorganic filler, optionally adding additives such as a curing accelerator and a release agent, into a thermosetting resin and mixing them; impregnating or covering a fibrous base material with the above mixture (hereinafter, simply referred to as "impregnating"); and further subjecting it to an aging treatment to semi-cure as necessary. A molded article having the above-described excellent properties is produced by heat-press molding this composite material. Representative examples of the fiber-reinforced molding materials include a sheet molding compound (SMC), a bulk molding compound (BMC), a prepreg, and a premix, which are classified according to the material form at the time of molding.

More specifically described with taking the SMC as an example, the SMC is a fiber-reinforced molding material having a sheet form and generally produced by the following steps. First, into a thermosetting resin, an inorganic filler, and optionally additives such as a curing accelerator (thickener) and a release agent, are added and stirring mixed, thereby preparing a thermosetting resin composition in a paste form (hereinafter, simply referred to as a "paste" in this paragraph). Secondly, the paste is applied onto a releasable carrier film by a SMC production apparatus. Thirdly, a fibrous base material is distributed onto the paste and another carrier film onto which the paste is applied is laminated on the fibrous base material such that the fibrous base material is sandwiched between these pastes, thereby obtaining a three-layer structure  sheet. Fourthly, this sheet is pressured between a plurality of rollers, thereby impregnating the fibrous base material with the paste and adjusting a thickness thereof to obtain the sheet having a predetermined thickness. Further, an aging treatment is generally performed. As a result, a SMC is produced. Then, the SMC produced as above is used as a material of a house-related product, a vehicle-related product and the like, with taking advantage of the above-described properties of a fiber-reinforced thermosetting material.

Molded articles produced by using such fiber-reinforced molding materials, especially vehicle-related products, are required to have a lighter weight in view of the environmental issue, in addition to the properties such as a mechanical strength. For example, in order to reduce the weight, amount of the filler or glass fiber contained in the fiber-reinforced molding material may be reduced. However, the reduction in the amount of the filler or the glass fiber generally results in significant deterioration of the mechanical strength of the molded article to be obtained. Further, in order to reduce the weight (attain a lower specific gravity), hollow fillers such as shirasu balloon or glass balloon may be contained in the fiber-reinforced molding material. However, excellent moldability or formability cannot be obtained by only adding the hollow fillers to the fiber-reinforced molding material. The addition of hollow fillers deteriorates the mechanical strength of the molded article as well as the surface smoothness and appearance thereof. Therefore, the fiber-reinforced molding material containing such hollow fillers cannot be employed as a structural part of aircraft or interior part of a railway car, which strongly requires a weight-reduction.

Under such circumstance, in order to reduce the weight of SMC and to improve the strength of SMC, Patent document 1 proposes a three-layer structure (a sandwiched structure) in which SMC of low specific gravity as a core (core layer) including a hollow filler is sandwiched between SMCs of high strength that does not include a hollow filler. However, in the production of SMC having a sandwich structure, at least two kinds of molding materials, i.e., SMC of low specific gravity and SMC of high strength, are required. Thus, the productivity is significantly deteriorated. Further, Patent document 2 proposes a sheet molding compound in which SMC layer of low specific gravity, which contains a hollow light filler in a thermosetting resin such as an unsaturated polyester resin, and SMC layer of high strength, which does not contain a hollow light filler, are strongly integrated, and also proposes a method of producing the same. However, the technique in Patent document 2 also requires a preparation of two kinds of thermosetting resin compositions to form SMC layer of low specific gravity and SMC layer of high strength. Thus, the number of process for production is increased and productivity is deteriorated. In addition, the fiber-reinforced material cannot be sufficiently dispersed on an outer surface of SMC, especially, on an outer surface of  SMC layer of low specific gravity. Thus, the mechanical strength and surface smoothness of the molded article to be obtained may be deteriorated. Consequently, a single-layer SMC having an excellent mechanical strength and surface smoothness is strongly required, which is free from deterioration in productivity and achieves the reduction in weight.

Further, the fiber-reinforced molding material, especially SMC, is strongly required to have an excellent flowability or fluidity at the time of molding under pressure and a low-pressure moldability (property which enables molding under low pressure).

Patent Document 1: JP-A-1-225533
Patent Document 2: JP-A-1-226311

## DISCLOSURE OF THE INVENTION

## PROBLEMS TO BE SOLVED BY THE INVENTION

The present invention has been made in the light of the situations described above. It is therefore an object of the present invention to provide a molded article constituted by a fiber-reinforced material having a light weight, excellent in the surface smoothness and mechanical strength. It is another object of the invention to provide a thermosetting resin composition advantageously used in the production of the molded article. It is still another object of the invention to provide a fiber-reinforced molding material advantageously used in the production of the molded article.

## MEANS FOR SOLVING THE PROBLEMS

The inventors of the present invention conducted an intensive study of the thermosetting resin composition used in the production of the fiber-reinforced molding material, and found that, by using a combination of a hollow filler having a specific tapped bulk density and a kaolin clay having a specific tapped bulk density, not only the reduction in weight of the molded article can be achieved, but also the low-pressure moldability can be provided for the fiber-reinforced molding material, resulting in improvement of a surface smoothness and a mechanical strength of the molded article. Thus, the present invention has been completed.

Specifically, it is an object of the present invention to provide a thermosetting resin composition used as a binder for a fibrous base material, comprising, as essential components: a thermosetting resin; a hollow filler having a tapped bulk density of 0.24 to 0.45 $g/cm^3$; and a kaolin clay having a tapped bulk density of 0.60 to 1.20 $g/cm^3$.

According to a preferable aspect of the thermosetting resin composition of the present invention, a thixotropic index thereof is 1.6 or more.

According to another preferable aspect of the thermosetting resin composition of the present invention, the thermosetting resin is a thermosetting phenolic resin.

It is another object of the present invention to provide a fiber-reinforced molding material comprising, as essential components, the thermosetting resin composition according to any one of the above aspects and a fibrous base material.

According to a preferable aspect of the fiber-reinforced molding material of the present invention, the fiber-reinforced molding material is in a sheet form, i.e., sheet molding compound (SMC).

It is still another object of the present invention to provide a molded article obtained by molding and curing the above fiber-reinforced molding material.

## ADVANTAGEOUS EFFECT OF THE INVENTION

As described above, the thermosetting resin composition according to the present invention comprises a thermosetting resin, and a combination of a hollow filler having a tapped bulk density of 0.24 to 0.45 $g/cm^3$, as a filler, and a kaolin clay having a tapped bulk density of 0.60 to 1.20 $g/cm^3$. Therefore, the reduction in weight can be achieved by the hollow filler and excellent thixotropic properties of a high viscosity can be exhibited by the combination of the hollow filler and the kaolin clay, which effectively improves the flowability of the composition at the time of application of the external pressure.

As a result, the fiber-reinforced molding material according to the present invention, which includes the thermosetting resin composition and the fibrous base material, can advantageously achieve the reduction in weight and improvement in flowability at the time of molding. Therefore, the molding can be performed under lower pressure than the conventional pressure, resulting in an excellent low-pressure moldability.

Accordingly, the molded article obtained by molding and curing the fiber-reinforced molding material advantageously achieves the reduction in weight as well as improvement of the dimensional accuracy and surface smoothness, because anisotropy is hardly caused by the fibrous base material due to the excellent low-pressure moldability as described above. Further, when the above-described fiber-reinforced molding material is used, the fibrous base material widely spread all over the molded article at the time of molding under pressure. Therefore, the strength can be effectively improved by the fibrous base material, which also leads to improvement of the mechanical strength of the molded article.

In addition, when a thermosetting phenolic resin is used as the thermosetting resin, the resulting molded article has excellent flame retardancy.

If the fiber-reinforced molding material according to the present invention is in a sheet form, as the fiber-reinforced molding material is excellent in low-pressure moldability as described above, a deep drawing molding can be readily performed.

BRIEF DESCRIPTION OF THE DRAWINGS

Fig. 1 is a SEM photograph of the kaolin clay used in Example 2, which is magnified 5000 times.
Fig. 2 is a SEM photograph of the kaolin clay used in Example 2, which is magnified 10000 times.
Fig. 3 is a SEM photograph of the kaolin clay used in Comparative Example 1, which is magnified 5000 times.
Fig. 4 is a SEM photograph of the kaolin clay used in Comparative Example 1, which is magnified 10000 times.

BEST MODE FOR CARRYING OUT THE INVENTION

The thermosetting resin composition according to the present invention comprises, as essential components, a thermosetting resin, and a hollow filler and a kaolin clay each having a specific tapped bulk density. The thermosetting resin composition is advantageously used as a binder for a fibrous base material or for other inorganic fillers, which are optionally used together therewith, for example.

Here, as the thermosetting resin, a thermosetting phenolic resin or an unsaturated polyester resin is generally used, but other thermosetting resins such as an epoxy resin, a melamine resin, and a guanamine resin may be used alone or used together with the thermosetting phenolic resin or unsaturated polyester resin, without deteriorating the curing properties thereof. Of these, the thermosetting phenolic resin is favorably used, because of its excellent flame retardancy. Examples of the thermosetting phenolic resins include a resol type phenolic resin, a benzylic ether type phenolic resin, a phenolic novolak resin, a modified phenolic resin thereof and a mixture thereof. Of these thermosetting phenolic resins, in view of coating properties and curing properties, the resol type phenolic resin may be favorably employed.

The thermosetting resin is present in the thermosetting resin composition, generally, in an amount of from 30 to 70% by mass, preferably in an amount of from 35 to 60% by mass in view of flam retardancy.

The hollow filler to be contained in the thermosetting resin composition according to the present invention has a tapped bulk density in a range of from 0.24 to 0.45 $g/cm^3$, preferably in a range of from 0.34 to 0.43 $g/cm^3$. When the tapped bulk density of the hollow filler is less than 0.24 $g/cm^3$, the surface smoothness of the resulting molded article is deteriorated even if the molded article is produced by using the thermosetting resin composition in the fiber-reinforced molded material such as SMC, as the binder for the fibrous base material. On the other hand, when the tapped bulk density of the hollow filler is more than 0.45 $g/cm^3$, weight of the resulting molded article may not be sufficiently reduced or mechanical strength thereof may be deteriorated, because the weight-reduction effect by the hollow filler is deteriorated. The term "tapped bulk density" refers to a bulk density at the time of being closely packed. In the present invention, the mass (bulk density) per unit area of the material to be tested is measured after the hollow filler is closely packed under the conditions of a tapping rate: 1 time/ second and a tapping time: 10 minutes, i.e., a total umber of tapping: 600.

The hollow filler used in the present application is not particularly limited as long as the tapped bulk density thereof is in the above range. Examples of the hollow fillers include conventionally known inorganic hollow fillers such as shirasu balloon, pearlite, glass balloon, silica balloon, and fly ash balloon. Any one of these hollow fillers may be used alone, or any combination of these hollow fillers may be used. Of these hollow fillers, glass balloon and silica balloon are favorably used. Especially, glass balloon is favorably used. Further, the shape and size of the hollow filler are not particularly limited. Generally, the hollow filler has a completely spherical shape, an oval spherical shape, or an irregular spherical shape. The average particle diameter of the hollow filler is generally in a range of from 1 to 100 $\mu$m, preferably in a range of from 30 to 70 $\mu$m. The above hollow fillers are commercially available. For example, glass balloon (product name: T-36, Z-60) is available from TOKAI KOGYO CO., LTD., JAPAN.

It is preferable that the hollow filler having the above-described tapped bulk density is present in the thermosetting resin composition in a ratio of 1 to 40% by mass, preferably in a ratio of 5 to 30% by mass. When the amount of the hollow filler is less than the above ratio, the weight-reduction effect by the hollow filler may not be sufficiently achieved. On the other hand, when the amount of the hollow filler is more than the above ratio, the viscosity of the thermosetting resin composition becomes too high and the relative amount of the thermosetting resin becomes less, whereby the thermosetting resin may not function as the binder, and further the relative amount of kaolin clay becomes less, whereby the mechanical strength and surface smoothness of the molded article may not be improved.

The kaolin clay to be contained in the thermosetting resin composition according to the present invention is naturally occurring clay (kaolinite, halloysite), which mainly contains aluminum silicate, and kaolin clay and pagodite clay produced by using pagodite (pyrophylite). Especially, one having a tapped bulk density in a range of from 0.60 to 1.20 $g/cm^3$, preferably in a range of from 0.65 to 1.15 $g/cm^3$, and more preferably in a range of from 0.70 to 1.00 $g/cm^3$ is employed. When the tapped bulk density thereof is less than 0.60 $g/cm^3$, the flame retardancy of the molded article may be deteriorated. On the other hand, when the tapped bulk density exceeds 1.20 $g/cm^3$, thixotropic properties cannot be sufficiently provided to the thermosetting resin composition, whereby the low-pressure moldability cannot be provided to the fiber-reinforced molding material even if the fiber-reinforced molding material is produced by using the composition as a binder for the fibrous base material. As a result, the surface smoothness of the molded article may not be improved, and the mechanical strength of the molded article may be deteriorated.

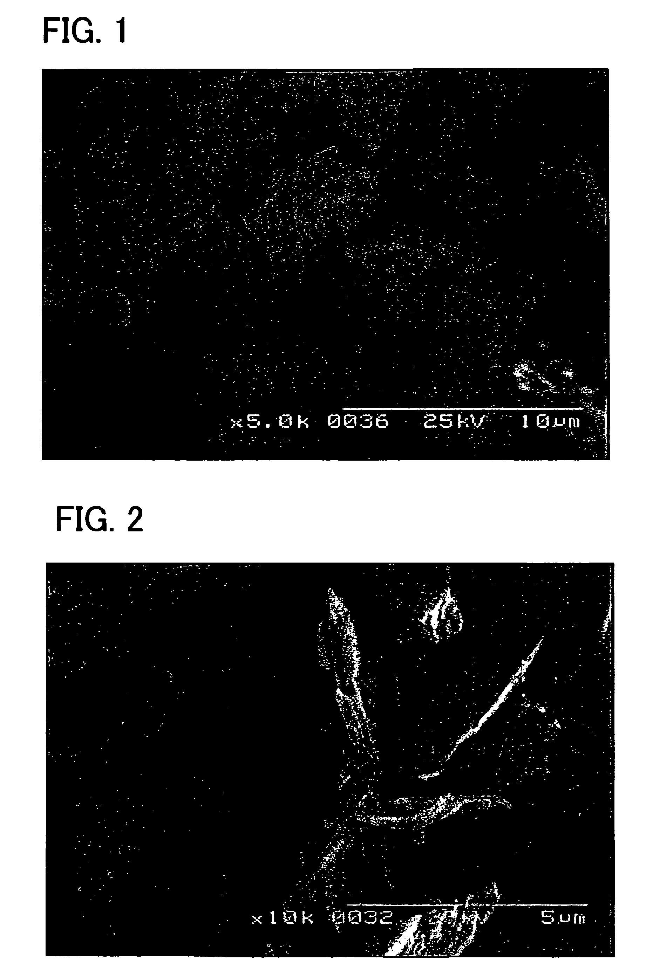

Of the kaolin clays having the above-described tapped bulk density, in the present invention, the kaolin clay having a shape shown in the scanning electron microscope (SEM) photographs of Fig. 1 and Fig. 2 is preferably used. Specifically, a kaolin clay having a flat shape or a thin-strip shape and having an average particle diameter of about 1 to 10 μm is preferably used. By the use of the kaolin clay having such a shape, the viscosity of the thermosetting resin composition is increased and thixotropic properties are advantageously improved as will be described later. Accordingly, spreadability is provided to the composition, which improves not only the impregnability of the composition to the fibrous base material by the external pressure, but also prevents excessive flow of the composition to the sides, at portions to which the external pressure is not applied. In addition, the composition has the thixotropic index that effectively improves the flowability or fluidity of the fiber-reinforced molding material under pressure. As a result, the composition can be molded under lower pressure than the conventional pressure, and the surface smoothness of the resulting molded article can be advantageously improved. The kaolin clay having the above-described shape is commercially available. Examples thereof include a kaolin clay (product name: FY86) available from FUJI RAITO KOGYO CO., LTD., JAPAN, and a kaolin clay (product name: HA, TP) available from SANYO CLAY LTD, JAPAN.

It is preferable that the kaolin clay having the above-described bulk density is present in the thermosetting resin composition in a ratio of 10 to 40% by mass, and favorably 10 to 30% by mass. When the amount of kaolin clay is less than the above ratio, advantage of the above-described low-pressure moldability and surface smoothness may not be exhibited even if the composition is used as the binder for the fibrous base material. On the other hand, when the amount of kaolin clay exceeds the above ratio, weight of the molded article cannot be sufficiently reduced even if the above-described hollow filler is used to reduce the weight of the molded article, because the kaolin clay having a relatively big tapped bulk density is present in a large amount.

Further, all that is required in the thermosetting resin composition of the present invention is that a hollow filler and a kaolin clay are used in a combination. Although the content ratio thereof is suitably determined depending on size, kind, and the like of the hollow filler, preferable ratio of the hollow filler to the kaolin clay in the thermosetting resin composition is 1: (0.5-10.0), preferably 1: (0.5-4.5), by mass. By employing the above ratio, the weight reduction and improvements of the mechanical strength and surface smoothness can be advantageously achieved.

To the thermosetting resin composition of the present invention, in addition to the above-described thermosetting resin, the hollow filler and the kaolin clay having a specific tapped bulk density, various additives such as another inorganic filler, a curing accelerator (thickener), a release agent, and a silane coupling agent, which are conventionally used, may be added as necessary without impairing the advantages of the present invention. Examples of inorganic fillers include aluminum hydroxide, calcium carbonate, talc, silica sand, and calcium silicate. Any one of these inorganic fillers may be used alone, or any combination of these inorganic fillers may be used. Examples of curing accelerators include hydroxide or oxide of alkaline-earth metal such as magnesium hydroxide, calcium hydroxide, and magnesium oxide. Examples of release agents include stearic acid series metallic salt such as zinc stearate and calcium stearate.

In the preparation of the thermosetting resin composition of the present invention, the conventional process may be employed. For example, the thermosetting resin composition according to the present invention in a form of paste can be prepared by the steps of: adding a thermosetting resin, a hollow filler having the tapped bulk density of 0.24 to 0.45 $g/cm^3$, and a kaolin clay having the tapped bulk density of 0.60 to 1.20 $g/cm^3$, which are essential components, into a conventional mixer such as MTI universal mixer available from TSUKISHIMA KIKAI Co., Ltd., JAPAN; adding various additives as necessary simultaneously with the essential components or in a predetermined order; and stirring and mixing it. Optionally, in the preparation of the thermosetting resin composition, solvents such as water, alcohol, acetone and the like may be added.

The resulting thermosetting resin composition includes the hollow filler having the tapped bulk density of 0.24 to 0.45 $g/cm^3$ and the kaolin clay having the tapped bulk density of 0.60 to 1.20 $g/cm^3$. Thus, the viscosity thereof is improved and thixotropic properties are provided, thereby advantageously improving the thixotropic index. Here, the "thixotropic index" is represented by a ratio of "a viscosity at rpm: $n_1$" to "a viscosity at rpm: $n_2$" ($n_1 > n_2$). In the present invention, the ratio (A/B) calculated by the viscosity (A) at 1 rpm and the viscosity (B) at 10 rpm, at 25°C, measured using a commercially available viscometer (for example, a programmable digital viscometer available from BROOKFIELD, USA) is used as a thixotropic index.

It is preferable that the thermosetting resin composition according to the present invention has the thixotropic index of 1.6 or more in order to improve the low-pressure moldability. Further, it is preferable that the upper limit of the thixotropic index is 4.0 or less, more preferably 3.5 or less, in view of deterioration of impregnability to the fibrous base material caused by the rapid rise in the viscosity of the thermosetting resin composition. Due to the thixotropic index of 1.6 or more, flowability of the thermosetting resin composition at the time of application of external pressure is effectively improved. Thus, when the thermosetting resin composition is used as a binder for the fibrous base material, excellent low-pressure moldability can be provided to the fiber-reinforced molding material.

The thermosetting resin composition according to the present invention is advantageously used as a binder for the fibrous base material in the production of the fiber-reinforced molding material. Hereinafter, the fiber-reinforced molding material according to the present invention including the above-described thermosetting resin composition and fibrous base material will be described in detail. As the fiber-reinforced molding material, a sheet molding compound (SMC), which has a sheet form, will be described in detail as an example.

The fiber-reinforced molding material of the present invention includes the above-described thermosetting resin composition in a paste form (hereinafter, referred to as a paste) and the fibrous base material, as essential components. As the paste, one at least including the above-described thermosetting resin, and the hollow filler and the kaolin clay respectively having a specific tapped bulk density, is used.

The fibrous base material is not particularly limited, and any fibrous base material may be used as long as it is mainly composed of a fibrous base material and has a reinforcement function. Depending on the characteristics required to the fiber-reinforced molding material or the application field thereof, one having a suitable shape and made of a suitable material is used. Examples of shapes of the fibrous base materials include various fibers such as filament, roving, strand, chopped strand, paper, mat, and cloth. Examples of materials of the fibrous base materials include a glass fiber, a carbon fiber, an aramid fiber, a phenolic fiber, a polyamide fiber, a polyester fiber, an alumina fiber, a metal fiber, a whisker, a milled fiber, a linter pulp, a hemp fiber, and a wood chip. Any one of these fibrous base materials may be used alone, or any combination of these fibrous base materials may be used. Among these, a glass fiber is favorably employed in SMC for reasons of cast, strength, and availability.

When the glass fiber is used as the fibrous base material, it is preferable that a silane coupling agent is used in combination. Due to the use of the silane coupling agent, affinity of glass fiber for the thermosetting resin contained in the paste is enhanced, thereby improving the adhesion between the thermosetting resin and the glass fiber. Preferable examples of the silane coupling agents include amino silane such as N-ß (amino ethyl)-γ-aminopropyltrimethoxysilane, and γ-aminopropyltriethoxysilane, epoxy silane such as γ-glycidoxypropyltrimethoxysilane. The silane coupling agent is generally present in a range of 0.01 to 5 parts by mass based on 100 parts by mass of the glass fiber. Preferably, it is present in a range of 0.05 to 3.0 parts by mass in view of advantages obtained by the addition of the silane coupling agent and the cost thereof. The silane coupling agent is generally added and mixed in the above-described paste in advance.

Then, the fiber-reinforced molding material of the present invention can be produced by impregnating the paste into the above-described fibrous base material according to the conventional method. Here, the fibrous base material is present in the fiber-reinforced molding material (SMC) in a ratio of from 3 to 60% by mass, preferably from 5 to 50% by mass, more preferably from 25 to 45% by mass. When the ratio is less than 3% by mass, the resulting SMC may not have a sufficient strength, because reinforcement effect by the fibrous base material cannot be sufficiently exhibited. On the other hand, when the ratio exceeds 60% by mass, the weight reduction effect may be deteriorated and it may also be difficult to impregnate the paste into the fibrous base material.

More specifically, the fiber reinforced-molding material according to the present invention can be typically produced as follows. First, by using a conventional SMC apparatus, a paste is applied onto a surface of two carrier films formed of polyethylene or polypropylene which are arranged in a vertical plane, so as to have a predetermined thickness. Secondly, onto the paste on the carrier film arranged below the other, a fibrous base material is dispersed and the carrier film arranged above is stacked thereon, thereby sandwiching the fibrous base material between the pastes. Thirdly, pressure is applied to this stack by running the stack between a plurality of rolls, for example. By the application of the pressure, the pastes are impregnated into the fibrous base material and, simultaneously, the thickness of the stack is controlled, thereby producing a sheet having a three layer structure in which a carrier film, a fibrous base material into which a paste is impregnated, and another carrier film are laminated in a vertical direction. Then, the sheet is subjected to an aging treatment (thickening treatment) as necessary to be semi-cured, thereby producing a SMC as a fiber-reinforced molding material according to the present invention. Here, when the aging treatment is performed, the condition of the treatment is suitably determined in view of the moldability of SMC. For example, a heat treatment may be performed for a few hours to a few days at a temperature of 50 to 70°C.

The SMC produced as above has an effectively improved flowability of the material at the time of molding, because the above-described paste is impregnated into the fibrous base material. Therefore, the SMC has low-pressure molding properties which enable the molding under lower pressure. As a result, expression of the anisotropy can be advantageously prevented and occurrence of uneven portions on the surface of the molded article can be advantageously prevented, and further, a deep drawing molding can be readily performed. In addition, due to the excellent flowability of the SMC, at the time of molding, the localization of the fibrous base material, which results from not being flowed, can be advantageously prevented, i.e., it can be advantageously prevented that only the paste is flowed and extended by the applied pressure. As a result, the fibrous base material widely spread all over the molded article. Thus, it can be advantageously prevented that the mechanical strength of the molded article is weakened due to nonuniform distribution of the fibrous base material, thereby advantageously improving the mechanical strength of the molded article. Further, due to the use of the hollow filler, in addition to the above-described advantages, the weight reduction of the molded article can be achieved.

When a SMC molded article is produced by using the SMC of the present invention, a conventional process may be employed. For example, a well-known press molding process may be employed. Specifically, first, a mold consisting of separable upper and lower portions, which gives the intended shape of the molded article, is provided. Secondly, into the mold, necessary amount of the SMC from which a carrier film was taken off is applied. Thirdly, the mold is heated under pressure. Finally, the mold is opened and the resulting molded article is obtained. In this process, the pressure and temperature for the molding can be suitably determined depending on the size, shape and the like of the intended molded article. For example, when a panel for building material is produced as a SMC molded article, according to the present invention, the molding can be advantageously performed under lower pressure than the conventional pressure, although a pressure of about 1 to 80 MPa and a temperature of about 30 to 240°C are conventionally employed, because the flowability of SMC is effectively improved.

Further, the molded article according to the present invention advantageously achieves the weight reduction by including the hollow filler having a specific tapped bulk density. Further, the paste which is obtained as an intermediate is provided with thixotropic properties because the hollow filler having a specific tapped bulk density and the kaolin clay having a specific tapped bulk density are contained in a combination. Therefore, the flowability of the SMC, which is a material of the molded article, is improved, resulting in excellent low-pressure molding properties of the molded article of the present invention. The molded article obtained by molding and curing such SMC not only can be readily subjected to a deep drawing molding but also can have a sufficient strength due to the fibrous base material uniformly spread all over the molded article, even though the hollow fillers are contained. Further, due to the improvement of the flowability of the SMC, surface smoothness of the molded article is advantageously improved, thereby advantageously producing the molded articles without defects in appearance.

Unlike the conventional technique, the present invention does not require a lamination molding of SMCs formed of two kinds of thermosetting resin compositions to produce a molded article, the present invention only requires a molding of SMC formed of one kind of thermosetting resin composition to produce a molded article. As a result, a significant reduction in productivity cannot be caused and simplification of the production process can be advantageously realized. Therefore, significant economical effect can be obtained.

Due to the success in the weight reduction and excellent mechanical strength and surface smoothness, the molded article of the present invention can be advantageously used as a housing-related product such as a bathtub, a water tank, a wastewater treatment tank, an exterior or interior panel, a vehicle-related product, an advertising board, a leisure boat, and a bobbin, for example. Especially, when a thermosetting phenolic resin is used as the thermosetting resin, as the excellent flame retardancy is provided with the molded article, the molded article is advantageously used as a vehicle-related product or housing-related product to which the flame retardancy is important. Further, as the present invention achieved the weight-reduction in addition to the improved flame retardancy, the molded article of the present invention can be advantageously used as an interior part of an aircraft or a railway car, which requires weight-reduction in view of the environmental issue. It is to be understood that when the molded article of the present invention is used, it may be subjected to a surface treatment such as a coating as necessary.

While the specific structure of the invention has been described in detail by using the SMC having a sheet form, for illustrative purpose only, it is to be understood that the present invention is not limited to the details of the above description. Other than the above SMC, various forms such as a bulk molding compound (BMC), a prepreg, and a premix, for example, may be an object of the present invention.

EXAMPLES

To further clarify the concept of the present invention, some examples of the invention will be described. It is to be understood that the invention is not limited to the details of the illustrated examples and the foregoing description, but may be embodied with various changes, modifications and improvements, which may occur to those skilled in the art without departing from the scope of the invention.

In the following examples, the following methods were employed to measure a tapped bulk density of a hollow filler and a kaolin clay, to measure a viscosity and a thixotropic index of a paste, to evaluate a low-pressure moldability of SMC, to measure a specific gravity and a specific strength and to evaluate a flame retardancy and a surface smoothness of a molded article.

(1) Measurement of tapped bulk density

Initially, a mass ($\alpha$) of a bulk density measurement cup made of stainless steel having a volume of 100 cm$^3$ (inner diameter: 50.40 mm, height: 50.15 mm) was measured. Then, a cylindrical spacer was attached to the opening of the measurement cup and a material to be tested (hollow filler or kaolin clay) was gently added thereinto by using a medicine spoon or the like to the top of the cylindrical spacer. Thereafter, a lid was attached to the cylindrical spacer so as to prevent the material to be tested from scattering. Accordingly, a measurement sample was prepared. Then, in a tapping holder of a powder tester (TYPE: RT-E) available from Hosokawa Micron Corporation, JAPAN, the above measurement sample was set, and tapping was performed for 10 minutes at a rate of 1 time/second, i.e., tapping was performed in a total of 600 times. Then, the measurement sample was taken off from the tapping holder, and the cylindrical spacer and the lid was gently taken off. Then, extra material that was raised from the opening of the measurement cup was leveled off with a blade and the mass ($\beta$) of the measurement cup containing the material to be tested was measured. The tapped bulk density was calculated by dividing the mass of the material to be tested, which was obtained by subtracting the mass ($\alpha$) of the measurement cup from the mass ($\beta$) of the measurement cup containing the material to be tested, by the volume of the measurement cup: 100 cm$^3$, as the following calculation formula.

$$\text{Tapped bulk density [g/cm}^3\text{]} = (\beta - \alpha)\,/100$$

This measurement was repeated four times and an average thereof was used as the tapped bulk density.

(2) Measurement of viscosity and thixotropic index of the paste

The viscosity of the paste was obtained as follows. First, about 10 g of the paste was put into a cylindrical vessel made of aluminum. Then, the temperature of the paste was controlled to $25 \pm 1.0°C$ in a warm water circulation type thermostat. Thereafter, the viscosity (B) at 10 rpm was measured by using Programmable Digital Viscometer (type: DV-II+, available from BROOKFIELD, USA). Meanwhile, the thixotropic index was obtained as follows. First, similarly to the above, by using the paste whose temperature was controlled to $25 \pm 1.0°C$, the viscosity (A) at 1 rpm was measured. Then, the ratio (=A/B) of the viscosity (A) at 1 rpm to the viscosity (B) at 10 rpm was calculated to obtain the thixotropic index.

(3) Evaluation of low-pressure moldability of SMC

First, a molded article having a substantially circular shape was obtained by cutting out a test piece (length: 5 cm, width: 5 cm) from the produced SMC (thickness: about 2 mm), and then sandwiching it between two mirror finish stainless steel plates (length: 470 mm, width: 290 mm, thickness: 1.5 mm), and heating it under pressure for three minutes at a temperature of 150°C and a pressure of 2.94 MPa, thereby obtaining the molded article having a substantially circular shape. Then, a diameter of the resulting molded article was measured at four points with a distance of 45° in a circumferential direction therebetween. This measurement was repeated two times, and an average value thereof was calculated. This average value was taken as flowability (cm) of the SMC. It can be judged that the bigger the value of the flowability becomes, the higher the flowability is and the better the low-pressure moldability is. The flowability of SMC was also measured at the molding pressures of 5.88 MPa and 11.8 MPa.

(4) Measurement of specific gravity and specific strength

A part of the produced molded article having a plate shape was cut out and the specific gravity thereof was measured under a room temperature by using Electronic Densimeter (MD-200S) available from Alfa Mirage Co., Ltd. Further, a test piece (length: 40 mm, width: 25 mm, thickness: 2.2 mm) was cut out from the produced molded article having a plate shape and a bending strength thereof as a mechanical strength was measured by using a Universal testing machine available from Minebea Co., Ltd. in accordance with JIS K 6911. The obtained bending strength was divided by the specific gravity, thereby obtaining the specific strength.

(5) Evaluation of flame retardancy

A test piece (length: 100 mm, width: 100 mm, thickness: 2.2 mm) was cut out from the produced molded article having a plate shape, and a combustion test was performed on the test piece by using a cone calorimeter for 10 minutes in accordance with "Fire Preventive and Fireproof Performance Test and Evaluation Procedure Manual" edited by General Building Research Corporation of Japan, thereby measuring the maximum heat generation rate. This test was repeated two times on each test piece, and one having an average maximum heat generation rate of 30 MJ/m$^2$ or less is regarded as "pass", while one having an average maximum heat generation rate of 30 MJ/m$^2$ or more is regarded as "fail".

(6) Evaluation of surface smoothness

The surface smoothness was evaluated by visually observing a surface of the molded article (confirming presence of uneven portion and degree of unevenness) and clearness of the fluorescent light reflected on the surface of the molded article. The evaluation criteria are as follows. "Excellent" denotes that no uneven portion was observed and good reflection of the fluorescent light was observed. "Good" denotes that no uneven portion was observed, but the reflection of the fluorescent light was not so clear as "Excellent". "Average" denotes that a few uneven portions were observed and reflection of the fluorescent light was not clear. "Poor" denotes that uneven portions were observed and the reflection of the fluorescent light was extremely bad.

-Example 1-

A paste for SMC, which is a thermosetting resin composition, was prepared by stirring and mixing the following materials for about 10 minutes with a hand mixer: 40 parts by mass of resol type phenolic resin (product name: AKP-012, available from Asahi Organic Chemicals Industry Co., Ltd.); 17 parts by mass of glass balloon having the tapped bulk density of 0.43 g/cm$^3$ (product name: Z-60, available from TOKAI KOGYO Co., Ltd., JAPAN), as the hollow filler; 12 parts by mass of kaolin clay having the tapped bulk density of 0.81 g/cm$^3$ (product name: HA, available from SANYO CLAY LTD., JAPAN): 0.6 part by mass of calcium hydroxide, as the curing accelerator (thickener); and 1 part by mass of zinc stearate, as the release agent; and 0.5 part by mass of 3-glycidoxypropyltrimethoxysilane, as the silane coupling agent. Then, the viscosity and thixotropic index of the resulting paste were measured. As a result, the viscosity (25°C) was 54000 mPa·s and the thixotropic index was 1.82.

Then, by using the SMC production apparatus, the following processes were performed. Specifically, the above paste for SMC was applied onto a carrier film made of polypropylene having a thickness of 40 μm; glass fiber roving cut into a length of about 2.54 cm (about 1 inch) was dispersed over the carrier film; another carrier film onto which the paste was applied was stacked on the above glass fiber, thereby sandwiching the glass fiber between the pastes to obtain three layer structure sheet; and the sheet was run between rollers to impregnate the paste into the glass fiber and control the thickness of the sheet at the same time. As shown in the following Table 1, the glass fiber was used in a ratio of 31 parts by mass to 69 parts by mass of a combination of the resol type phenolic resin, the hollow filler, and the kaolin clay. The volume content of each material was as follows: phenolic resin: about 42.5 vol%, hollow filler: about 36 vol%, kaolin clay: about 6 vol%, and glass fiber: about 15.5 vol%. Then, the resulting sheet was subjected to an aging treatment for 65 hours at 50°C, thereby obtaining SMC having an average thickness of about 2 mm. By using the SMC obtained as above, the low-pressure moldability was evaluated. The results thereof are shown in the following Table 1.

Further, about 160 g was cut out from the produced SMC and contained in a cavity (length: 270 mm, width: 210 mm, depth: 2.2 mm) of the mold, which was chromium plated and attached to a pressure press machine preheated to 150°C. Immediately after that, a pressing die is set and a heat molding under pressure was performed for five minutes at a molding pressure of 5.88 MPa, thereby producing a molded article having a thickness of 2.2 mm. By using the molded article obtained as above, the specific gravity and specific strength were measured and the flame retardancy and surface smoothness were evaluated. The results thereof are also shown in the following Table 1.

-Examples 2, 3-

Pastes for SMC, which are the thermosetting resin compositions, were prepared in the same way as Example 1, with the exception that instead of the kaolin clay having a tapped bulk density of 0.81 g/cm$^3$ in Example 1, the kaolin clay having a tapped bulk density of 0.79 g/cm$^3$ (product name: FY86, available from FUJI RAITO KOGYO CO., LTD., JAPAN) was used in Example 2, and the kaolin clay having a tapped bulk density of 1.15 g/cm$^3$ (product name: TP, available from SANYO CLAY LTD, JAPAN) was used in Example 3. The viscosity and the thixotropic index of the pastes were measured. The results thereof are shown in the following Table 1. Then, SMCs were produced by using the pastes and the glass fibers such that the volume content ratio of each material (phenolic resin, hollow filler, kaolin clay, and glass fiber) becomes the same as that of the each material of Example 1. A low-pressure moldability of each of the resulting SMCs was evaluated. The results are shown in the following Table 1. Further, molded articles were produced by use of these SMCs. The above-described specific gravity and specific strength of the molded articles were measured and the flame retardancy and surface smoothness thereof were evaluated. The results thereof are also shown in the following Table 1. Further, SEM photographs of the kaolin clay used in Example 2 were taken at different magnifications, as shown in Fig. 1 (magnified 5000 times) and Fig. 2 (magnified 10000 times).

-Example 4-

A paste for SMC, which is a thermosetting resin composition, was prepared by stirring and mixing the following materials for about 10 minutes with a hand mixer: 43 parts by mass of resol type phenolic resin (product name: AKP-012, available from Asahi Organic Chemicals Industry Co., Ltd., JAPAN); 11. parts by mass of glass balloon having the tapped bulk density of 0.25 g/cm$^3$ (product name: T-36, available from TOKAI KOGYO Co., Ltd., JAPAN), as the hollow filler; 13 parts by mass of kaolin clay having the tapped bulk density of 0.81 g/cm$^3$ (product name: HA, available from SANYO CLAY LTD., JAPAN): 0.6 part by mass of calcium hydroxide, as the curing accelerator (thickener); and 1 part by mass of zinc stearate, as the release agent; and 0.5 part by mass of 3-glycidoxypropyltrimethoxysilane, as the silane coupling agent. Then, the viscosity and thixotropic index of the resulting paste were measured. The results thereof are shown in the following Table 1. Then, SMC was produced by impregnating the paste into the glass fiber in a content ratio shown in the following Table 1 such that the volume content ratio of each material becomes the same as that of the each material of Example 1. The low-pressure moldability of the resulting SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

-Example 5-

A paste for SMC, which is a thermosetting resin composition, was prepared by stirring and mixing the following materials for about 10 minutes with a hand mixer: 42 parts by mass of resol type phenolic resin (product name: AKP-012, available from Asahi Organic Chemicals Industry Co., Ltd., JAPAN); 15 parts by mass of glass balloon having the tapped bulk density of 0.34 g/cm$^3$ (a combination of Z-60 and T-36), as the hollow filler; 10 parts by mass of kaolin clay having the tapped bulk density of 0.81 g/cm$^3$ (product name: HA, available from SANYO CLAY LTD.): 0.6 part by mass of calcium hydroxide, as the curing accelerator (thickener); and 1 part by mass of zinc stearate, as the release agent; and 0.5 part by mass of 3-glycidoxypropyltrimethoxysilane, as the silane coupling agent. Then, the viscosity and thixotropic index of the resulting paste were measured. The results thereof are shown in the following Table 1. Then, SMC was produced by impregnating the paste into the glass fiber in a content ratio shown in the following Table 1 such that the volume content ratio of each material becomes the same as that of the each material of Example 1. The low-pressure moldability of the resulting SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

-Example 6-

A paste for SMC, which is a thermosetting resin composition, was prepared by stirring and mixing the following materials for about 10 minutes with a hand mixer: 30 parts by mass of unsaturated polyester resin (product name: FLQ225, available from JAPAN U-Pica Corporation); 10 parts by mass of glass balloon having the tapped bulk density of 0.43 g/cm$^3$ (product name: Z-60, available from TOKAI KOGYO Co., Ltd.); 30 parts by mass of kaolin clay having the tapped bulk density of 0.81 g/cm$^3$ (product name: HA, available from SANYO CLAY LTD.): 1.5 parts by mass of Tertiary-Butyl Peroxybenzoate (TBPB), as the polymerization initiator, and 1.0 part by mass of magnesium oxide as the thickener. Then, the viscosity and thixotropic index of the resulting paste were measured. The results thereof are shown in the following Table 1. Then, SMC was produced by impregnating the paste into the glass fiber in a content ratio shown in the following Table 1. The low-pressure moldability of the resulting SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

COMPARATIVE EXAMPLES

-Comparative Example 1-

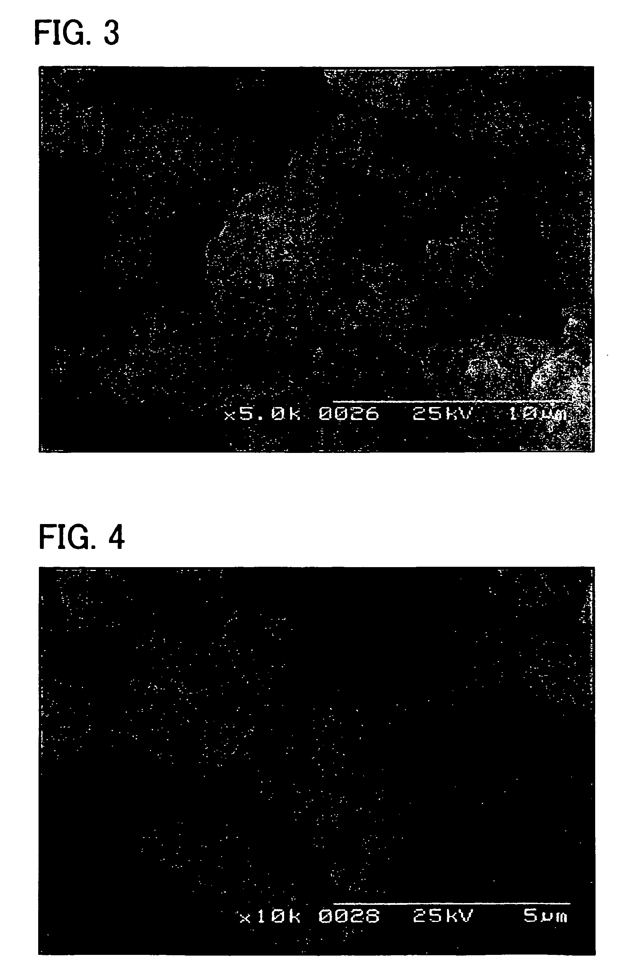

A paste for SMC, which is the thermosetting resin composition, was prepared in the same way as Example 1, with the exception that instead of the kaolin clay having a tapped bulk density of 0.81 g/cm$^3$ in Example 1, the kaolin clay having a tapped bulk density of 1.22 g/cm$^3$ (product name: TC600, available from TOYO KASEI CO., LTD) was used. The viscosity and the thixotropic index of the pastes were measured and the results thereof are shown in the following Table 1. Then, SMC was produced by using the paste and the glass fiber such that the volume content ratio of each material becomes the same as that of the each material of Example 1. A low moldability of the resulting SMC was evaluated, and the results are shown in the following Table 1. Further, a molded article was produced by use of this SMC. By using the molded article, the specific gravity and specific strength were measured and the flame retardancy and surface smoothness were evaluated. The results thereof are also shown in the following Table 1. Further, SEM photographs of the kaolin clay used in Comparative Example 1 were taken at different magnifications, as shown in Fig. 3 (magnified 5000 times) and Fig. 4 (magnified 10000 times).

-Comparative Example 2-

A paste for SMC, which is a thermosetting resin composition, was prepared by stirring and mixing the following materials for about 10 minutes with a hand mixer: 43 parts by mass of resol type phenolic resin (product name: AKP-012, available from Asahi Organic Chemicals Industry Co., Ltd.); 11 parts by mass of glass balloon having the tapped bulk density of 0.22 $g/cm^3$ (product name; Z-36 available from TOKAI KOGYO Co., Ltd.); 13 parts by mass of kaolin clay having the tapped bulk density of 0.81 $g/cm^3$ (product name: HA, available from SANYO CLAY LTD.): 0.6 part by mass of calcium hydroxide, as the curing accelerator (thickener); and 1 part by mass of zinc stearate, as the release agent; and 0.5 part by mass of 3-glycidoxypropyltrimethoxysilane, as the silane coupling agent. Then, the viscosity and thixotropic index of the resulting paste were measured. The results thereof are shown in the following Table 1. Then, SMC was produced by impregnating the paste into the glass fiber in a content ratio shown in the following Table 1 such that the volume content ratio of each material becomes the same as that of the each material of Example 1. The low-pressure moldability of the resulting SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

-Comparative Example 3-

A paste for SMC, which is a thermosetting resin composition, was prepared by stirring and mixing the following materials for about 10 minutes with a hand mixer: 40 parts by mass of resol type phenolic resin (product name: AKP-012, available from Asahi Organic Chemicals Industry Co., Ltd.); 20 parts by mass of glass balloon having the tapped bulk density of 0.47 $g/cm^3$ (product name; Q-CEL5070S available from Potters-Ballotini Co., Ltd.); 9 parts by mass of kaolin clay having the tapped bulk density of 0.81 $g/cm^3$ (product name: HA, available from SANYO CLAY LTD.): 0.6 part by mass of calcium hydroxide, as the curing accelerator (thickener); 1 part by mass of zinc stearate, as the release agent; and 0.5 part by mass of 3-glycidoxypropyltrimethoxysilane, as the silane coupling agent. Then, the viscosity and thixotropic index of the resulting paste were measured. The results thereof are shown in the following Table 1. Then, SMC was produced by impregnating the paste into the glass fiber in a content ratio shown in the following Table 1 such that the volume content ratio of each material becomes the same as that of the each material of Example 1. The low-pressure moldability of the resulting SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

-Comparative Example 4-

A paste for SMC, which is a thermosetting resin composition, was prepared by stirring and mixing the following materials for about 10 minutes with a hand mixer: 40 parts by mass of resol type phenolic resin (product name: AKP-012, available from Asahi Organic Chemicals Industry Co., Ltd.); 35 parts by mass of kaolin clay having the tapped bulk density of 0.81 $g/cm^3$ (product name: HA, available from SANYO CLAY LTD.): 0.6 part by mass of calcium hydroxide, as the curing accelerator (thickener); and 1 part by mass of zinc stearate, as the release agent; and 0.5 part by mass of 3-glycidoxypropyltrimethoxysilane, as the silane coupling agent. Then, the viscosity and thixotropic index of the resulting paste were measured. The results thereof are shown in the following Table 1. Then, SMC was produced by impregnating the paste into the glass fiber in a content ratio shown in the following Table 1. The low-pressure moldability of the resulting SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

-Comparative Example 5-

A paste for SMC, which is a thermosetting resin composition, was prepared by stirring and mixing the following materials for about 10 minutes with a hand mixer: 31 parts by mass of unsaturated polyester resin (product name:

FLQ225, available from JAPAN U-Pica Corporation); 6 parts by mass of glass balloon having the tapped bulk density of 0.22 g/cm$^3$ (product name: Z-36, available from TOKAI KOGYO Co., Ltd.); 32 parts by mass of kaolin clay having the tapped bulk density of 0.81 g/cm$^3$ (product name: HA, available from SANYO CLAY LTD.): 1.5 parts by mass of Tertiary-Butyl Peroxybenzoate (TBPB), as the polymerization initiator, and 1.0 part by mass of magnesium oxide as the thickener. Then, the viscosity and thixotropic index of the resulting paste were measured. The results thereof are shown in the following Table 1. Then, SMC was produced by impregnating the paste into the glass fiber in a content ratio shown in the following Table 1. The low-pressure moldability of the resulting SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

-Comparative Example 6-

A paste for SMC, which is a thermosetting resin composition, was prepared by stirring and mixing the following materials for about 10 minutes with a hand mixer: 30 parts by mass of unsaturated polyester resin (product name: FLQ225, available from JAPAN U-Pica Corporation); 10 parts by mass of glass balloon having the tapped bulk density of 0.43 g/cm$^3$ (product name: Z-60, available from TOKAI KOGYO Co., Ltd.); 30 parts by mass of kaolin clay having a tapped bulk density of 1.22 g/cm$^3$ (product name: TC600, available from TOYO KASEI CO., LTD): 1.5 parts by mass of Tertiary-Butyl Peroxybenzoate (TBPB), as the polymerization initiator; and 1.0 part by mass of magnesium oxide as the thickener. Then, the viscosity and thixotropic index of the resulting paste were measured. The results thereof are shown in the following Table 1. Then, SMC was produced by impregnating the paste into the glass fiber in a content ratio shown in the following Table 1. The low-pressure moldability of the SMC was evaluated and the result thereof is shown in the following Table 1. Further, a molded article was produced by use of this SMC. The specific gravity and specific strength of the molded article were measured and the flame retardancy and surface smoothness thereof were evaluated. The results thereof are also shown in Table 1.

Table 1

| | | | Examples | | | | | | Comparative Examples | | | | | |
|---|---|---|---|---|---|---|---|---|---|---|---|---|---|---|
| | | | 1 | 2 | 3 | 4 | 5 | 6 | 1 | 2 | 3 | 4 | 5 | 6 |
| Content ratio [mass%] | Thermosetting resin | Resol type phenolic resin | 40 | 40 | 40 | 43 | 42 | - | 40 | 43 | 40 | 40 | - | - |
| | | Unsaturated polyester resin | - | - | - | - | - | 30 | - | - | - | - | 31 | 30 |
| | Hollow filler | (tapped bulk density) 0.22 [g/cm³] | - | - | - | - | - | - | - | 11 | - | - | 6 | - |
| | | 0.25 [g/cm³] | - | - | - | 11 | - | - | - | - | - | - | - | - |
| | | 0.34 [g/cm³] | - | - | - | - | 15 | - | - | - | - | - | - | - |
| | | 0.43 [g/cm³] | 17 | 17 | 17 | - | - | 10 | 17 | - | - | - | - | 10 |
| | | 0.47 [g/cm³] | - | - | - | - | - | - | - | - | 20 | - | - | - |
| | Kaolin clay | 0.79 [g/cm³] | - | 12 | - | - | - | - | - | - | - | - | 32 | - |
| | | 0.81 [g/cm³] | 12 | - | 12 | 13 | 10 | 30 | - | 13 | 9 | 35 | - | - |
| | | 1.15 [g/cm³] | - | - | - | - | - | - | - | - | - | - | - | - |
| | | 1.22 [g/cm³] | - | - | - | - | - | - | 12 | - | - | - | - | - |
| | Glass fiber | | 31 | 31 | 31 | 33 | 33 | 30 | 31 | 33 | 31 | 25 | 31 | 30 |
| Paste properties | Viscosity [mPa·s] | | 54000 | 57400 | 60000 | 54400 | 46000 | 30000 | 48400 | 44400 | 49000 | 42000 | 32000 | 34000 |
| | Thixotropic index | | 1.82 | 3.31 | 1.70 | 1.80 | 2.17 | 2.00 | 1.40 | 1.56 | 1.30 | 3.30 | 1.20 | 1.10 |

(continued)

| | | | EXAMPLES | | | | | | COMPARATIVE EXAMPLES | | | | | |
|---|---|---|---|---|---|---|---|---|---|---|---|---|---|---|
| | | | 1 | 2 | 3 | 4 | 5 | 6 | 1 | 2 | 3 | 4 | 5 | 6 |
| SMC properties | Flowability [cm] | Molding pressure: 2.94 MPa | 9.1 | 8.9 | 9.5 | 9.0 | 9.5 | 10.0 | 8.8 | 8.0 | 7.8 | 10.1 | 8.2 | 7.5 |
| | | Molding pressure: 5.88 MPa | 10.0 | 10.2 | 10.1 | 10.0 | 10.3 | 12.0 | 9.3 | 8.5 | 8.1 | 11.3 | 9.0 | 7.8 |
| | | Molding pressure: 11.76 MPa | 11.1 | 10.6 | 10.8 | 10.5 | 10.9 | 13.9 | 9.9 | 8.9 | 8.3 | 12.2 | 9.3 | 8.1 |
| Physical properties of the molded article | Specific gravity | | 1.29 | 1.26 | 1.27 | 1.22 | 1.24 | 1.51 | 1.29 | 1.20 | 1.30 | 1.80 | 1.50 | 1.52 |
| | Specific strength [MPa] | | 106.4 | 100.0 | 100.1 | 100.2 | 101.0 | 91.1 | 78.1 | 92.9 | 87.1 | 79.3 | 91.7 | 91.4 |
| | Flame retardancy | | Pass | Pass | Pass | Pass | Pass | Fail | Pass | Pass | Pass | Pass | Fail | Fail |
| Appearance of the molded article | Surface smoothness | | Excellent | Good | Good | Good | Good | Excellent | Poor | Average | Poor | Excellent | Average | Poor |

14

As apparent from the results shown in Table 1, Examples 1 to 6 in which the hollow filler having a tapped bulk density within a range of 0.24 to 0.45 g/cm$^3$ and the kaolin clay having a tapped bulk density within a range of 0.60 to 1.20 g/cm$^3$ show much less specific gravity and weight thereof was advantageously reduced, compared to Comparative Example 4 in which the hollow filler is not included. Further, in all of Examples 1 to 6, the thixotropic index of the paste (thermosetting resin composition) shows 1.6 or more. The flowablitity of the SMC (fiber-reinforced resin composition) shows about 10 cm at both of the molding pressure of 5.88 MPa and the molding pressure of 11.76 MPa. From this, it can be recognized that the low-pressure moldability is provided. Further, it is recognized that the molded articles of Examples 1 to 6 have a high specific strength and fine surface smoothness (Excellent or Good). Furthermore, it is recognized that the flame retardancy is secured in the molded articles of Examples 1 to 5.

Meanwhile, Comparative Examples 1 to 3, and 5 to 6 in which both of the hollow filler and the kaolin clay were used, but the tapped bulk density of either of them was out of the above-described range, show the thixotropic index of less than 1.6. The flowability thereof was apt to be deteriorated and the evaluation of the surface smoothness of the resulting molded article was "poor" or "average". Further, the specific strength was deteriorated.

In addition, when the resulting molded articles having a substantially circular shape were visually observed, with respect to the molded articles of Comparative Examples 1 to 3 and 5 to 6, the glass fibers were localized in a middle part thereof and were not dispersed to the periphery thereof. However, with respect to the molded articles of Examples 1 to 6, the glass fibers were well dispersed to the periphery thereof.

**Claims**

1. A thermosetting resin composition used as a binder for a fibrous base material, comprising: a thermosetting resin; a hollow filler having a tapped bulk density of 0.24 to 0.45 g/cm$^3$; and a kaolin clay having a tapped bulk density of 0.60 to 1.20 g/cm$^3$.

2. The thermosetting resin composition according to claim 1, wherein a thixotropic index thereof is 1.6 or more.

3. The thermosetting resin composition according to claim 1 or 2, wherein the thermosetting resin is present in an amount of from 30 to 70% by mass.

4. The thermosetting resin composition according to any one of claims 1 to 3, wherein the thermosetting resin is a thermosetting phenolic resin.

5. The thermosetting resin composition according to any one of claims 1 to 4, wherein the hollow filler is present in an amount of from 1 to 40% by mass.

6. The thermosetting resin composition according to any one of claims 1 to 5, wherein the hollow filler has an average particle diameter of from 1 to 100 $\mu$m.

7. The thermosetting resin composition according to any one of claims 1 to 6, wherein the hollow filler is one of glass balloon and silica balloon.

8. The thermosetting resin composition according to any one of claims 1 to 7, wherein the kaolin clay is present in an amount of from 10 to 40% by mass.

9. The thermosetting resin composition according to any one of claims 1 to 8, wherein the kaolin clay has an average particle diameter of from 1 to 10 $\mu$m and have one of a flat shape and a thin-strip shape.

10. The thermosetting resin composition according to any one of claims 1 to 9, wherein the kaolin clay is present in an amount of from 0.5 to 10.0 parts by mass, based on 1 part by mass of the hollow filler.

11. A fiber-reinforced molding material comprising the thermosetting resin composition according to any one of claims 1 to 10 and a fibrous base material.

12. The fiber-reinforced molding material according to claim 11, wherein the fibrous base material is present in an amount of from 3 to 60% by mass.

13. The fiber-reinforced molding material according to claim 11 or 12, wherein the fibrous base material is a glass fiber.

**14.** The fiber-reinforced molding material according to any one of claims 11 to 13, wherein the fiber-reinforced molding material is in a sheet form.

**15.** A molded article obtained by molding and curing the fiber-reinforced molding material according to any one of claims 11 to 14.

**Patentansprüche**

**1.** Duroplastische Harzzusammensetzung, die als Bindemittel für ein faserförmiges Basismaterial verwendet wird und Folgendes umfasst: ein duroplastisches Harz; einen hohlen Füllstoff mit einer Stampfdichte von 0,24 bis 0,45 g/cm$^3$; und einen Kaolinton mit einer Stampfdichte von 0,60 bis 1,20 g/cm$^3$.

**2.** Duroplastische Harzzusammensetzung nach Anspruch 1, deren Thixotropieindex 1,6 oder mehr beträgt.

**3.** Duroplastische Harzzusammensetzung nach Anspruch 1 oder 2, wobei das duroplastische Harz in einer Menge von 30 bis 70 Masse-% enthalten ist.

**4.** Duroplastische Harzzusammensetzung nach einem der Ansprüche 1 bis 3, wobei das duroplastische Harz ein duroplastisches Phenolharz ist.

**5.** Duroplastische Harzzusammensetzung nach einem der Ansprüche 1 bis 4, wobei der hohle Füllstoff in einer Menge von 1 bis 40 Masse-% enthalten ist.

**6.** Duroplastische Harzzusammensetzung nach einem der Ansprüche 1 bis 5, wobei der hohle Füllstoff einen mittleren Teilchendurchmesser von 1 bis 100 μm aufweist.

**7.** Duroplastische Harzzusammensetzung nach einem der Ansprüche 1 bis 6, wobei der hohle Füllstoff aus Glaskügelchen und Silicakügelchen ausgewählt ist.

**8.** Duroplastische Harzzusammensetzung nach einem der Ansprüche 1 bis 7, wobei der Kaolinton in einer Menge von 10 bis 40 Masse-% enthalten ist.

**9.** Duroplastische Harzzusammensetzung nach einem der Ansprüche 1 bis 8, wobei der Kaolinton einen mittleren Teilchendurchmesser von 1 bis 10 μm und eine aus einer flachen Form und einer dünnen Streifenform ausgewählte Form aufweist.

**10.** Duroplastische Harzzusammensetzung nach einem der Ansprüche 1 bis 9, wobei der Kaolinton bezogen auf 1 Masseteil des hohlen Füllstoffs in einer Menge von 0,5 bis 10,0 Masseteilen enthalten ist.

**11.** Faserverstärkter Formstoff, der eine duroplastische Harzzusammensetzung nach einem der Ansprüche 1 bis 10 und ein faserförmiges Basismaterial umfasst.

**12.** Faserverstärkter Formstoff nach Anspruch 11, wobei das faserförmige Basismaterial in einer Menge von 3 bis 60 Masse-% enthalten ist.

**13.** Faserverstärkter Formstoff nach Anspruch 11 oder 12, wobei das faserförmige Basismaterial eine Glasfaser ist.

**14.** Faserverstärkter Formstoff nach einem der Ansprüche 11 bis 13, wobei der faserverstärkte Formstoff in flächiger Form vorliegt.

**15.** Formteil, das durch Formen und Härten eines faserverstärkten Formstoffs nach einem der Ansprüche 11 bis 14 erhalten ist.

**Revendications**

**1.** Composition de résine thermodurcissable utilisée comme un liant pour un matériau à base fibreuse, comprenant :

une résine thermodurcissable ; une charge creuse ayant une densité de masse tassée de 0,24 à 0,45 g/cm$^3$ ; et de l'argile au kaolin ayant une densité de masse tassée de 0,60 à 1,20 g/cm$^3$.

2. Composition de résine thermodurcissable selon la revendication 1, dans laquelle un indice thixotropique de celle-ci est de 1,6 ou plus.

3. Composition de résine thermodurcissable selon la revendication 1 ou 2, dans laquelle la résine thermodurcissable est présente en une quantité de 30 à 70% en masse.

4. Composition de résine thermodurcissable selon l'une quelconque des revendications 1 à 3, dans laquelle la résine thermodurcissable est une résine phénolique thermodurcissable.

5. Composition de résine thermodurcissable selon l'une quelconque des revendications 1 à 4, dans laquelle la charge creuse est présente en une quantité de 1 à 40% en masse.

6. Composition de résine thermodurcissable selon l'une quelconque des revendications 1 à 5, dans laquelle la charge creuse a un diamètre de particule moyen de 1 à 100 μm.

7. Composition de résine thermodurcissable selon l'une quelconque des revendications 1 à 6, dans laquelle la charge creuse est une parmi un verre ballon et un ballon en silice.

8. Composition de résine thermodurcissable selon l'une quelconque des revendications 1 à 7, dans laquelle l'argile au kaolin est présente en une quantité de 10 à 40% en masse.

9. Composition de résine thermodurcissable selon l'une quelconque des revendications 1 à 8, dans laquelle l'argile au kaolin a un diamètre de particule moyen de 1 à 10 μm et a une d'une forme plate et d'une forme de bande mince.

10. Composition de résine thermodurcissable selon l'une quelconque des revendications 1 à 9, dans laquelle l'argile au kaolin est présente en une quantité de 0,5 à 10,0 parties en masse, basée sur 1 partie en masse de la charge creuse.

11. Matériau de moulage renforcé par des fibres comprenant la composition de résine thermodurcissable selon l'une quelconque des revendications 1 à 10 et un matériau à base de fibres.

12. Matériau de moulage renforcé par des fibres selon la revendication 11, où le matériau à base de fibres est présent en une quantité de 3 à 60% en masse.

13. Matériau de moulage renforcé par des fibres selon la revendication 11 ou 12, où le matériau à base de fibres sont des fibres en verre.

14. Matériau de moulage renforcé par des fibres selon l'une quelconque des revendications 11 à 13, dans lequel le matériau de moulage renforcé par des fibres est sous la forme d'une feuille.

15. Article moulé obtenu par le moulage et le durcissement du matériau de moulage renforcé par des fibres selon l'une quelconque des revendications 11 à 14.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1225533 A
- JP 1226311 A